# EUROPEAN PATENT APPLICATION

(11) **EP 4 199 167 A1**
(43) Date of publication of application: **21.06.2023**
(21) Application number: 21888936.8
(22) Date of filing: 21.09.2021
(51) Int. Cl.: H01M 10/0562, H01M 10/0585, H01M 50/262

(54) **SUPPORT STRUCTURE**

(30) Priority: 06.11.2020 JP 2020186036
(71) Applicant: AISAN KOGYO KABUSHIKI KAISHA, Obu-shi, Aichi 474-8588 (JP)
(72) Inventor: TAGA, Kazuki, Obu-shi, Aichi 474-8588 (JP); YOSHIOKA, Mamoru, Obu-shi, Aichi 474-8588 (JP)
(74) Representative: Kramer Barske Schmidtchen Patentanwälte PartG mbB
(86) International application number: PCT/JP2021/034656
(87) International publication number: WO 2022/097383

(57) **Abstract**

A supporting structure includes a housing accommodating an all-solid-state battery; and a supporting member interposed between the all-solid-state battery and the housing and supporting the all-solid-state battery while the all-solid-state battery is accommodated in the housing. The supporting member includes a plurality of first spring portions arranged in a first direction orthogonal to a direction in which the all-solid-state battery and the supporting member are arranged. The first spring portions each include a first supporting point portion projecting toward the housing or the all-solid-state battery; a pair of second supporting point portions projecting toward an opposite side to the first supporting point portion at positions spaced from the first supporting point portion in the first direction; and a first cavity portion provided between the pair of second supporting point portions at a position facing the first supporting point portion.

## Description

### Technical Field

The present invention relates to a supporting structure for an all-solid-state battery.

### Background Art

Patent Document 1 describes a battery module. The battery module of Patent Document 1 includes an all-solid-state battery and a restraining component for restraining the all-solid-state battery. The restraining component includes a pair of end plates arranged at opposing ends of the all-solid-state battery and a tension band that connects the end plates to restrain the all-solid-state battery in a compressed state. The tension band has elastically deformable recesses and projections.

### Citation List

Patent Document 1: Japanese Patent Application Publication No. 2019-114477

### Summary of Invention

### Technical Problem

In the battery module of Patent Document 1, attempting to reduce expansion of the all-solid-state battery may result in an increase in its physical size. The present specification provides a technology that enables a reduction in expansion of an all-solid-state battery with a small physical size.

### Solution to Technical Problem

The present specification discloses a supporting structure supporting an all-solid-state battery. The supporting structure comprises a housing accommodating the all-solid-state battery; and a supporting member interposed between the all-solid-state battery and the housing and supporting the all-solid-state battery while the all-solid-state battery is accommodated in the housing. The supporting member comprises a plurality of first spring portions arranged in a first direction orthogonal to a direction in which the all-solid-state battery and the supporting member are arranged. The first spring portions each comprise a first supporting point portion projecting toward the housing or the all-solid-state battery; a pair of second supporting point portions projecting toward an opposite side to the first supporting point portion at positions spaced from the first supporting point portion in the first direction; and a first cavity portion provided between the pair of second supporting point portions at a position facing the first supporting point portion.

According to this configuration, even if the all-solid-state battery expands within the housing, the expansion of the all-solid-state battery can be reduced by the plurality of first spring portions of the supporting member supporting the all-solid-state battery in the direction in which the all-solid-state battery and the supporting member are arranged.

The supporting member may comprise a plurality of second spring portions facing the first spring portions in the direction in which the all-solid-state battery and the supporting member are arranged. The second spring portions may each comprise a third supporting point portion projecting toward the opposite side to the first supporting point portion; a pair of fourth supporting point portions projecting toward an opposite side to the third supporting point portion at positions spaced from the third supporting point portion in the first direction; and a second cavity portion provided between the pair of fourth supporting point portions at a position facing the third supporting point portion. Each pair of second supporting point portions of the first spring portions and corresponding pair of fourth supporting point portions of the second spring portions facing the first spring portions may be fixed to each other to face each other.

According to this configuration, the expansion of the all-solid-state battery can be further reduced by the plurality of first spring portions and the plurality of second spring portions supporting the all-solid-state battery.

The first spring portions may each comprise a first body portion extending in the first direction. Each pair of second supporting point portions of the first spring portions may project from the first body portion toward the opposite side to the first supporting point portion. Corner portions may be provided between a first cavity portion-side surface of each first body portion and side surfaces of the second supporting point portions. Inner surfaces of the corner portions may be configured as curved surfaces.

According to this configuration, when the supporting member is compressed, stress concentration at the corner portions can be suppressed.

The first spring portions may each comprise a first insertion hole. The second spring portions may each comprise a second insertion hole at a position facing its corresponding first insertion hole.

According to this configuration, the supporting member can be compressed by inserting, for example, jigs in the respective first insertion holes and second insertion holes and bringing the jigs closer to each other. While in the compressed state, the supporting member can be inserted between the housing and the all-solid-state battery. This facilitates mounting of the supporting member.

The first spring portions may each comprise a first body portion extending in the first direction. The first supporting point portion of each first spring portion may project from the first body portion toward the housing or the all-solid-state battery. A first engagement portion may be provided between a first supporting point portion-side surface of the first body portion and a side surface of the first supporting point portion. The second spring portions may each comprise a second body portion extending in the first direction. The third supporting point portion of each second spring portion may project from the second body portion toward the opposite side to the first supporting point portion. A second engagement portion may be provided between a third supporting point portion-side surface of the second body portion and a side surface of the third supporting point portion.

According to this configuration, the supporting member can be compressed by engaging, for example, jigs with the respective first engagement portions and second engagement portions and bringing the jigs closer to each other. While in the compressed state, the supporting member can be inserted between the housing and the all-solid-state battery. This facilitates mounting of the supporting member.

### Brief Description of the Drawings

FIG. 1 is a cross-sectional view of a supporting structure for an all-solid-state battery according to a first embodiment.
FIG. 2 is an enlarged view of a part II in FIG. 1.
FIG. 3 is an enlarged view of a part III in FIG. 1.
FIG. 4 is a cross-sectional view of a supporting structure for an all-solid-state battery according to a second embodiment.
FIG. 5 is an enlarged view of a part V in FIG. 4.
FIG. 6 is an enlarged view of a part VI in FIG. 5.
FIG. 7 is a cross-sectional view of a part of a supporting member according to a third embodiment.
FIG. 8 is a cross-sectional view of a part of a supporting member according to a fourth embodiment.
FIG. 9 is a cross-sectional view of a part of a supporting structure for an all-solid-state battery according to a variant.
FIG. 10 is a cross-sectional view of a part of a supporting structure for an all-solid-state battery according to a variant.
FIG. 11 is a Y-Z cross-sectional view of a supporting structure for an all-solid-state battery according to a variant.
FIG. 12 is a cross-sectional view of a part of a supporting structure for an all-solid-state battery according to a variant.

### Description of Embodiments

### First Embodiment

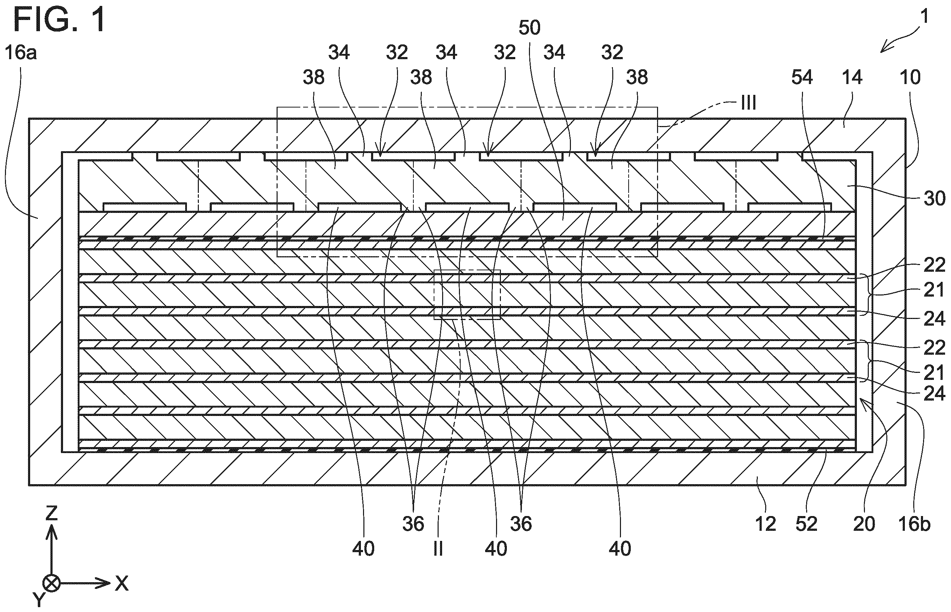

Referring to the drawings, a supporting structure 1 according to a first embodiment is described. As illustrated in FIG. 1, the supporting structure 1 (which will be termed "supporting structure 1" hereinafter) comprises a housing 10 and a supporting member 30 accommodated in the housing 10. The supporting structure 1 can support an all-solid-state battery 20. The following description is given with reference to X, Y, and Z directions in the drawings.

First, the all-solid-state battery 20 is described. The all-solid-state battery 20 is accommodated in the housing 10 of the supporting structure 1. The all-solid-state battery 20 comprises a plurality of all-solid-state battery cells 21 (which will be termed "battery cells 21" hereinafter). The battery cells 21 are stacked in the Z direction within the housing 10. Each battery cell 21 may expand its volume while being charged.

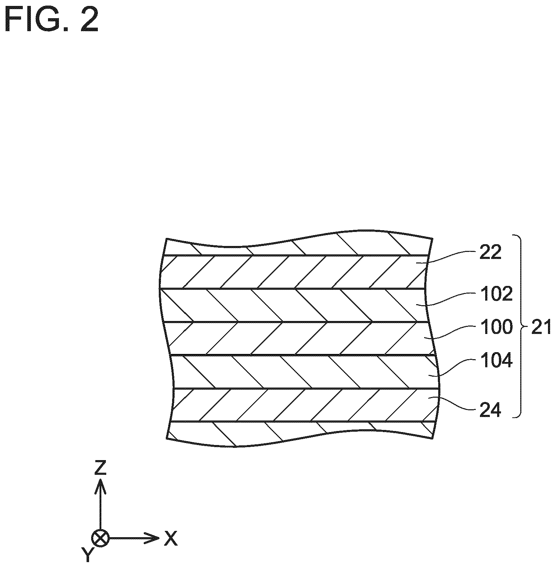

As illustrated in FIG. 2, each battery cell 21 comprises a positive-electrode power collector 22, a positive-electrode active material layer 102, a solid electrolyte layer 100, a negative-electrode active material layer 104, and a negative-electrode power collector 24. The positive-electrode power collector 22, the positive-electrode active material layer 102, the solid electrolyte layer 100, the negative-electrode active material layer 104, and the negative-electrode power collector 24 are stacked in the Z direction. Adjoining battery cells 21 in the Z direction (stacking direction) share the positive-electrode power collector 22 or the negative-electrode power collector 24. The positive-electrode power collector 22 and the negative-electrode power collector 24 collect power generated by the battery cell 21. The positive-electrode power collector 22 is electrically connected to a positive-electrode terminal (not illustrated). The negative-electrode power collector 24 is electrically connected to a negative-electrode terminal (not illustrated).

The solid electrolyte layer 100 is interposed between the positive-electrode active material layer 102 and the negative-electrode active material layer 104. Each battery cell 21 is a battery in which the electrolyte is not liquid but solid. The positive-electrode active material layer 102, the solid electrolyte layer 100, and the negative-electrode active material layer 104 are all solid. The positive-electrode active material layer 102 of the battery cell 21 is electrically connected to the positive-electrode power collector 22. The positive-electrode active material layer 102 is constituted of, for example, a material including a lithium oxide (e.g., lithium cobalt oxide, lithium manganese oxide, or the like). The negative-electrode active material layer 104 of the battery cell 21 is electrically connected to the negative-electrode power collector 24. The negative-electrode active material layer 104 is constituted of, for example, a material including silicon (SiC) or carbon (C). The solid electrolyte layer 100 is constituted of, for example, a material including lithium or the like.

Next, the housing 10 (see FIG. 1) is described. The housing 10 is constituted of a metal, for example, iron, aluminum, or the like. The housing 10 comprises a bottom plate portion 12, a top plate portion 14, a left plate portion 16a, and a right plate portion 16b. The bottom plate portion 12, the top plate portion 14, the left plate portion 16a, and the right plate portion 16b are configured integrally. The bottom plate portion 12 and the top plate portion 14 are arranged in the Z direction with a space therebetween. The bottom plate portion 12 and the top plate portion 14 are each configured to have a substantially flat plate shape. The all-solid-state battery 20 and the supporting member 30 are interposed between the bottom plate portion 12 and the top plate portion 14. The all-solid-state battery 20 and the supporting member 30 are arranged in the Z direction within the housing 10.

A first insulating film 52 is interposed between the all-solid-state battery 20 and the bottom plate portion 12 of the housing 10. The first insulating film 52 is interposed between the lowermost battery cell 21 among the plurality of battery cells 21 and the bottom plate portion 12. The first insulating film 52 insulates the lowermost battery cell 21 of the all-solid-state battery 20 from the bottom plate portion 12.

The left plate portion 16a and the right plate portion 16b are arranged in the X direction (an example of first direction) with a space therebetween. The left plate portion 16a and the right plate portion 16b are each configured to have a substantially flat plate shape. The all-solid-state battery 20 and the supporting member 30 are interposed between the left plate portion 16a and the right plate portion 16b. The housing 10 may comprise a front plate portion disposed at the front in a direction orthogonal to the sheet on which FIG. 1 is presented (in Y direction) and a rear plate portion disposed at the rear in the direction, although they are not illustrated. The front plate portion and the rear plate portion have the same configurations as the left plate portion 16a and the right plate portion 16b, respectively.

Next, the supporting member 30 is described. The supporting member 30 is interposed between the top plate portion 14 of the housing 10 and the all-solid-state battery 20. An intermediate plate 50 is interposed between the supporting member 30 and the all-solid-state battery 20. The supporting member 30 is constituted of a metal, for example, iron, aluminum, or the like. The supporting member 30 comprises a plurality of first spring portions 32. The first spring portions 32 are arranged in the X direction (in a direction orthogonal to the direction in which the all-solid-state battery 20 and the supporting member 30 are arranged (Z direction)). The supporting member 30 is configured by the first spring portions 32 adjoining in the X direction.

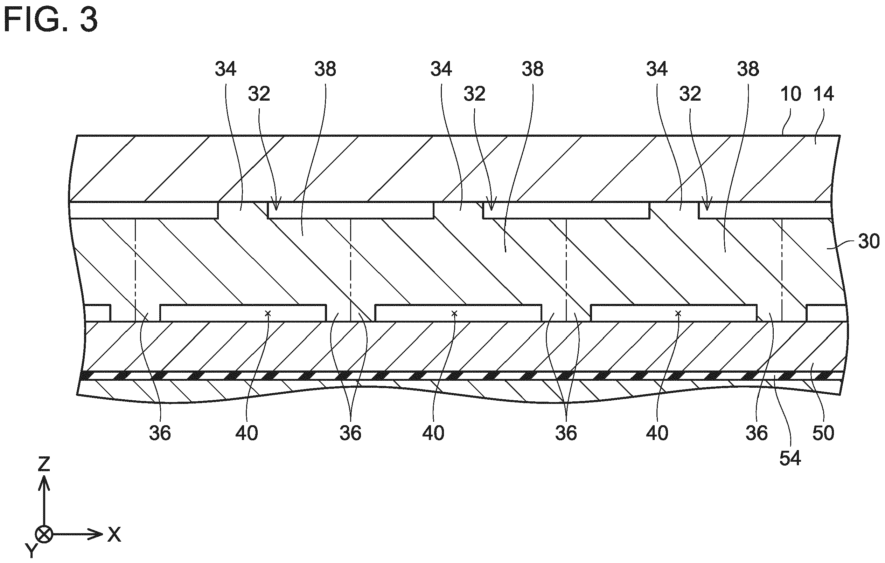

As illustrated in FIG. 3, the first spring portions 32 each comprise a first body portion 38, a first supporting point portion 34 fixed to the first body portion 38, and a pair of second supporting point portions 36 fixed to the first body portion 38. The first body portion 38 extends in the X direction. The first supporting point portion 34 and the pair of second supporting point portions 36 are disposed at positions spaced from each other in the X direction. The first supporting point portion 34 projects from the first body portion 38 toward the housing 10. The first supporting point portion 34 projects toward the top plate portion 14 of the housing 10. A base end portion of the first supporting point portion 34 is fixed to a central portion of the first body portion 38 in the X direction. A terminal end portion of the first supporting point portion 34 is in contact with the top plate portion 14 of the housing 10.

The paired second supporting point portions 36, 36 are spaced from each other. The pair of second supporting point portions 36, 36 projects from the first body portion 38 toward the all-solid-state battery 20. The pair of second supporting point portions 36, 36 projects toward the intermediate plate 50. Base end portions of the second supporting point portions 36 are fixed to end portions of the first body portion 38 in the X direction. Terminal end portions of the second supporting point portions 36 are in contact with the intermediate plate 50. A first cavity portion 40 is provided between the pair of second supporting point portions 36, 36. The first cavity portion 40 is disposed at a position that faces the first supporting point portion 34 with the first body portion 38 interposed therebetween.

Adjoining first spring portions 32, 32 in the X direction (in the left-right direction in the drawing) share a second supporting point portion 36. Out of the adjoining first spring portions 32, 32 in the X direction (in the left-right direction), the right second supporting point portion 36 of the left first spring portion 32 is integrated with the left second supporting point portion 36 of the right first spring portion 32. Further, the first body portion 38 of the left first spring portion 32 is integrated with the first body portion 38 of the right first spring portion 32.

In each first spring portion 32, when the first supporting point portion 34 and the pair of second supporting point portions 36, 36 are compressed in the Z direction, the first body portion 38 deflects. Since the first cavity portion 40 is provided between the pair of second supporting point portions 36, 36, the compression of the first supporting point portion 34 and the pair of second supporting point portions 36, 36 causes the first spring portion 32 to deform and contract in the Z direction. In the supporting structure 1 for the all-solid-state battery 20, when the all-solid-state battery 20 expands while being charged, the plurality of first spring portions 32 is compressed in the Z direction. The supporting member 30 presses the all-solid-state battery 20 in the Z direction with a restoring force against the compression of the plurality of first spring portions 32. The supporting member 30 presses the all-solid-state battery 20 via the intermediate plate 50.

The intermediate plate 50 interposed between the supporting member 30 and the all-solid-state battery 20 is constituted of a metal, for example, iron, aluminum, or the like. A second insulating film 54 is interposed between the intermediate plate 50 and the all-solid-state battery 20. The second insulating film 54 is interposed between the uppermost battery cell 21 among the plurality of battery cells 21 and the intermediate plate 50. The second insulating film 54 insulates the uppermost battery cell 21 of the all-solid-state battery 20 from the intermediate plate 50.

The supporting structure 1 according to the first embodiment has been described above. As clear from the description above, the supporting structure 1 comprises the supporting member 30 that is interposed between the all-solid-state battery 20 and the housing 10 and supports the all-solid-state battery 20 while the all-solid-state battery 20 is accommodated in the housing 10. The supporting member 30 comprises the plurality of first spring portions 32 arranged in the X direction. The first spring portions 32 each comprise the first supporting point portion 34 projecting toward the housing 10, the pair of second supporting point portions 36 projecting toward the opposite side to the first supporting point portion 34 at positions spaced from the first supporting point portion 34 in the X direction, and the first cavity portion 40 provided between the pair of second supporting point portions 36 at a position facing the first supporting point portion 34.

According to this configuration, even if the all-solid-state battery 20 expands within the housing 10, the plurality of first spring portions 32 of the supporting member 30 can press the all-solid-state battery 20 with a restoring force against the contraction of the plurality of first spring portions 32 in the Z direction. The all-solid-state battery 20 can be supported by the supporting member 30 in the Z direction (in the direction in which the all-solid-state battery 20 and the supporting member 30 are arranged). Thus, the expansion of the all-solid-state battery 20 can be reduced with a small physical size.

Further, a surface pressure can be ensured by the plurality of first spring portions 32 pressing the all-solid-state battery 20 with its restoring force. If the positive-electrode active material layers 102 and/or the negative-electrode active material layers 1 04 are separated from the solid electrolyte layers 100 in the all-solid-state battery 20, the power generation capacity may be reduced, however, the separation of the positive-electrode active material layers 102 and/or the negative-electrode active material layers 104 from the solid electrolyte layers 100 can be suppressed by the plurality of first spring portions 32 pressing the all-solid-state battery 20 with its restoring force. A reduction in the power generation capacity of the all-solid-state battery 20 can be suppressed.

One embodiment has been described above, however, specific features are not limited to those of the embodiment above. In the following description, elements that are the same as those described above will be labeled with the same signs and description thereof will be omitted.

### Second Embodiment

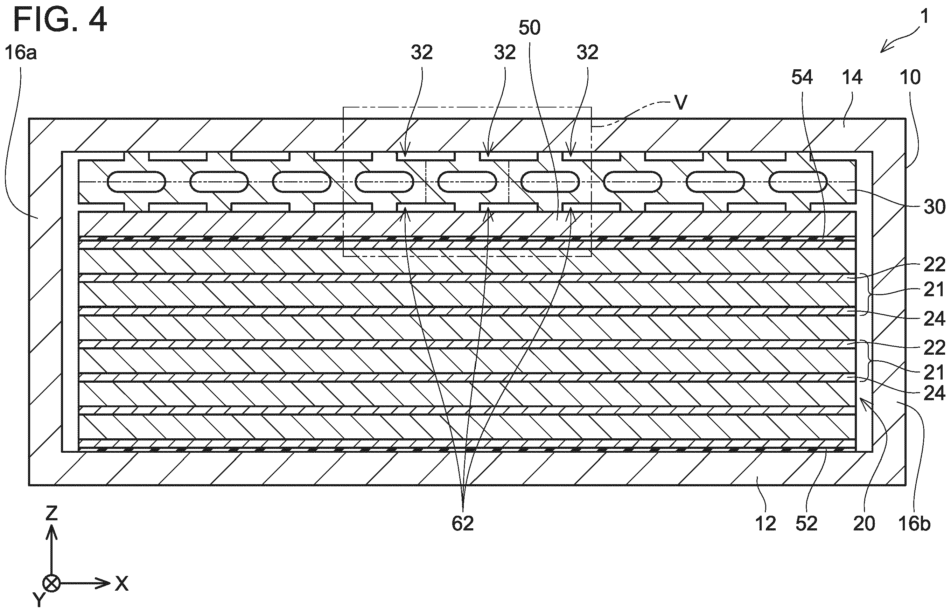

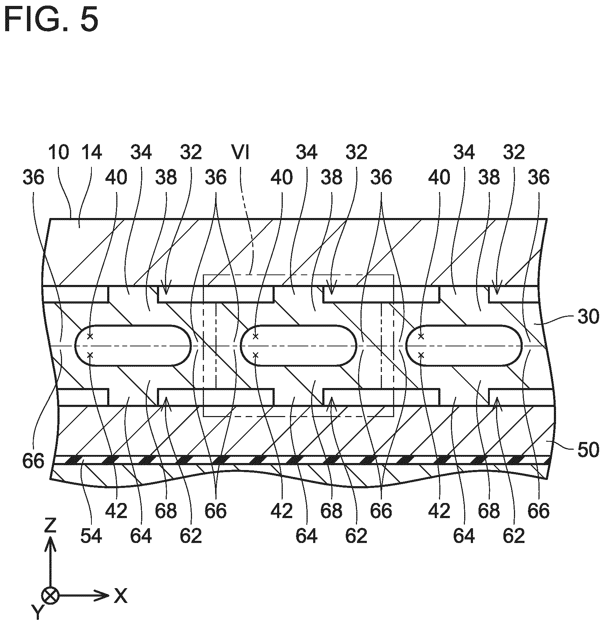

In a second embodiment, a supporting member 30 comprises a plurality of second spring portions 62 as illustrated in FIGS. 4 and 5. The plurality of second spring portions 62 faces a plurality of first spring portions 32 in Z direction (in a direction in which an all-solid-state battery 20 and the supporting member 30 are arranged). The plurality of second spring portions 62 and the plurality of first spring portions 32 are configured integrally. Each second spring portion 62 has a configuration of a first spring portion 32 that is inverted in the Z direction. The second spring portions 62 are arranged in X direction (a direction orthogonal to the direction in which the all-solid-state battery 20 and the supporting member 30 are arranged (Z direction)). The supporting member 30 is configured by the second spring portions 62 adjoining in the X direction and by each second spring portion 62 adjoining a corresponding first spring portion 32 in the Z direction. Since the first spring portions 32 have been described in connection with the first embodiment, detailed description for elements that are the same as those described in connection with the first embodiment is omitted.

The second spring portions 62 each comprise a second body portion 68, a third supporting point portion 64 fixed to the second body portion 68, and a pair of fourth supporting point portions 66 fixed to the second body portion 68. The second body portion 68 extends in the X direction. The third supporting point portion 64 and the pair of fourth supporting point portions 66 are disposed at positions spaced from each other in the X direction. The third supporting point portion 64 projects from the second body portion 68 toward the all-solid-state battery 20. The third supporting point portion 64 projects toward an intermediate plate 50. A base end portion of the third supporting point portion 64 is fixed to a central portion of the second body portion 68 in the X direction. A terminal end portion of the third supporting point portion 64 is in contact with the intermediate plate 50. The third supporting point portion 64 projects toward the opposite side to the first supporting portion 34 of the first spring portion 32.

The paired fourth supporting point portions 66, 66 are spaced from each other. The pair of fourth supporting point portions 66, 66 projects from the second body portion 68 toward the housing 10. The pair of fourth supporting point portions 66, 66 projects toward the pair of second supporting point portions 36 of the first spring portion 32. The pair of fourth supporting point portions 66, 66 faces the pair of second supporting portions 36 of the first spring portion 32. Base end portions of the fourth supporting point potions 66 are fixed to end portions of the second body portion 68 in the X direction. Terminal end portions of the fourth supporting point portions 66 are fixed to the second supporting point portions 36 of the first spring portion 32. The fourth supporting point portions 66 of the second spring portion 62 and the second supporting point portions 36 of the first spring portion 32 are configured integrally.

A second cavity portion 42 is provided between the pair of fourth supporting point portions 66, 66. The second cavity portion 42 is provided at a position that faces the third supporting point portion 64 with the second body portion 68 interposed therebetween. The second cavity portion 42 is configured integrally with the first cavity portion 40 of the first spring portion 32. A single cavity portion is configured by the first cavity portion 40 and the second cavity portion 42.

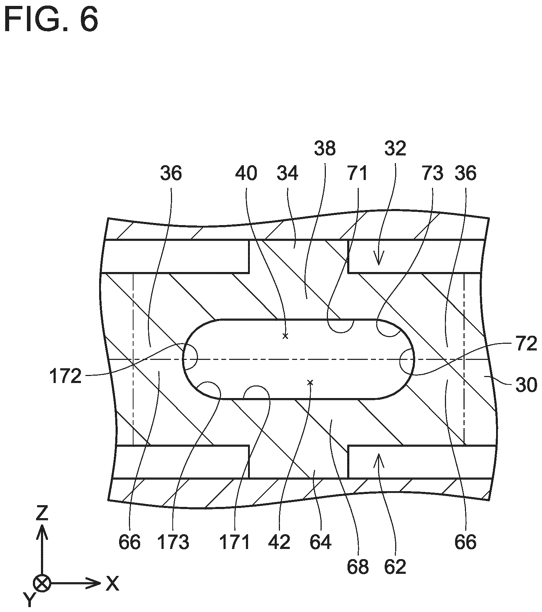

As illustrated in FIG. 6, second corner portions 173 are provided between a second cavity portion 42-side surface 171 of the second body portion 68 of the second spring portion 62 and side surfaces 172 of the fourth supporting point portions 66. Inner surfaces of the second corner portions 173 are configured as curved surfaces. In other words, corner portions of an inner surface of the second cavity portion 42 (the second corner portions 173) are configured as curved surfaces.

Likewise, first corner portions 73 are provided between a first cavity portion 40-side surface 71 of the first body portion 38 of the first spring portion 32 and side surfaces 72 of the second supporting point portions 36. Inner surfaces of the first corner portions 73 are configured as curved surfaces. In other words, corner portions of an inner surface of the first cavity portion 40 (the first corner portions 73) are configured as curved surfaces.

As illustrated in FIG. 5, adjoining second spring portions 62, 62 in the X direction (left-right direction) share a fourth supporting point portion 66. Out of the adjoining second spring portions 62, 62 in the X direction (left-right direction), the right fourth supporting point portion 66 of the left second spring portion 62 is configured integrally with the left fourth supporting point portion 66 of the right second spring portion 62.

In each second spring portion 62, when the third supporting point portion 64 and the pair of fourth supporting point portions 66, 66 are compressed in the Z direction, the second body portion 68 deflects. Since the second cavity portion 42 is provided between the pair of fourth supporting point portions 66, 66, the compression of the third supporting point portion 64 and the pair of fourth supporting point portions 66, 66 in the Z direction causes the second spring portion 62 to deform and contract in the Z direction. In the supporting structure 1 for the all-solid-state battery 20, when the all-solid-state battery 20 expands while being charged, the plurality of second spring portions 62 is compressed in the Z direction. Likewise, the plurality of first spring portions 32 is also compressed in the Z direction (refer to the first embodiment). The supporting member 30 presses the all-solid-state battery 20 in the Z direction with its restoring force against the compression of the plurality of first spring portions 32 and the plurality of second spring portions 62. The supporting member 30 presses the all-solid-state battery 20 via the intermediate plate 50.

The second embodiment has been described above. As clear from the description above, the supporting structure 1 according to the second embodiment comprises the plurality of second spring portions 62 facing the plurality of first spring portions 32 in the Z direction. The second spring portions 62 each comprise the third supporting point portion 64 projecting toward the opposite side to the first supporting point portion 34, the pair of fourth supporting point portions 66 projecting toward the opposite side to the third supporting point portion 64 at positions spaced from the third supporting point portion 64 in the X direction, and the second cavity portion 42 provided between the pair of fourth supporting point portions 66 at a position facing the third supporting point portion 64.

According to this configuration, the expansion of the all-solid-state battery 20 can be further reduced by the plurality of first spring portions 32 and the plurality of second spring portions 62 supporting the all-solid-state battery 20. Since the pairs of second supporting point portions 36 and the pair of fourth supporting point portions 66 are fixed to face each other, a force due to the expansion of the all-solid-state battery 20 can be supported in a balanced manner.

Further, in the supporting member 30 described above, the first corner portions 73 are provided between the first cavity portion 40-side surface 71 of the first body portion 38 and the side surfaces 72 of the second supporting point portions 36 of each first spring portion 32. The inner surfaces of the first corner portions 73 are configured as curved surfaces. According to this configuration, when the supporting member 30 is compressed in the Z direction, stress concentration at the first corner portions 73 can be suppressed. The same applies to the second corner portions 173.

### Third Embodiment

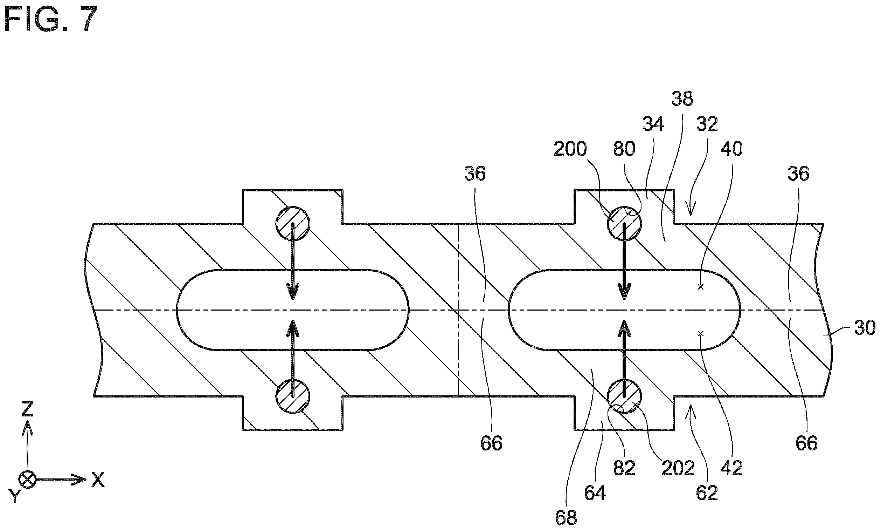

In a third embodiment, as illustrated in FIG. 7, first spring portions 32 each comprise a first insertion hole 80. Further, second spring portions 62 each comprise a second insertion hole 82. The first insertion hole 80 is provided in a central portion of the first spring portion 32 in the X direction. The first insertion hole 80 lies across a first body portion 38 and a first supporting point portion 34 of the first spring portion 32. The second insertion hole 82 is provided in a central portion of the second spring portion 62 in the X direction. The second insertion hole 82 lies across a second body portion 68 and a third supporting point portion 64 of the second spring portion 62. The second insertion hole 82 is provided at a position facing the first insertion hole 80 in the Z direction (in a direction in which an all-solid-state battery 20 and a supporting member 30 are arranged). The first insertion hole 80 and the second insertion hole 82 face each other with a first cavity portion 40 and a second cavity portion 42 interposed therebetween. The first insertion hole 80 and the second insertion hole 82 each extend in the Y direction.

Jigs 200 and 202 for compressing the supporting member 30 are inserted in the first insertion holes 80 and the second insertion holes 82, respectively. The supporting member 30 can be compressed in the Z direction by bringing the jigs 200, 202 inserted in the insertion holes 80, 82 closer to each other in the Z direction. While the supporting member 30 is in the compressed state, the supporting member 30 is inserted between a top plate portion 14 of a housing 10 and an intermediate plate 50. This facilitates mounting of the supporting member 30 to the all-solid-state battery 20.

### Fourth Embodiment

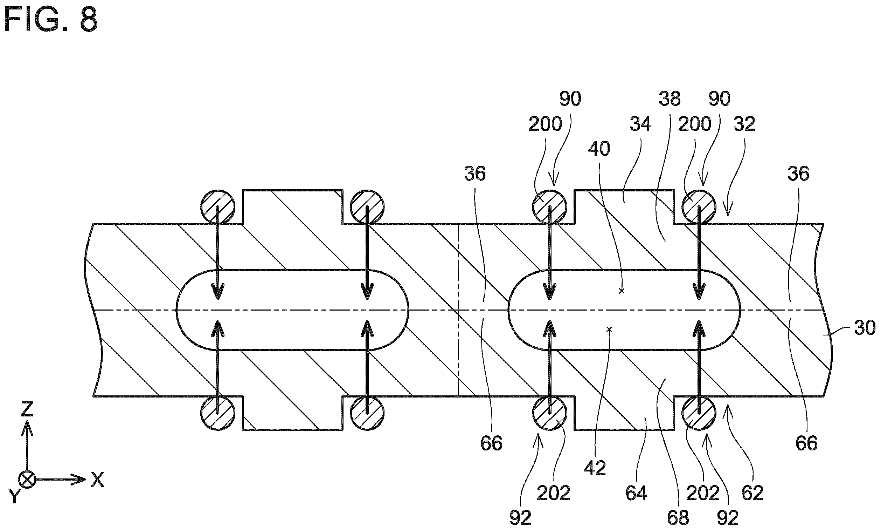

In a fourth embodiment, as illustrated in FIG. 8, first spring portions 32 each comprise a pair of first engagement portions 90. The pair of engagement portions 90 is provided between an upper surface (a first supporting point portion 34-side surface) of a first body portion 38 of the first spring portion 32 and side surfaces of the first supporting point portion 34. The first supporting point portion 34 is interposed between the pair of engagement portions 90. Each engagement portion 90 is configured with a bending surface.

Further, second spring portions 62 each comprise a pair of second engagement portions 92. The pair of second engagement portions 92 is provided between a lower surface (a third supporting point portion 64-side surface) of a second body portion 68 of the second spring portion 62 and side surfaces of the third supporting point portion 64. The third supporting point portion 64 is interposed between the pair of second engagement portions 92. Each second engagement portion 92 is configured with a bending surface. The pair of first engagement portions 90 and the pair of second engagement portions 92 face each other in the Z direction with a first cavity portion 40 and a second cavity portion 42 interposed therebetween.

Jigs 200 and 202 for compressing the supporting member 30 engage with the first engagement portions 90 and the second engagement portions 92, respectively. The supporting member 30 can be compressed in the Z direction by bringing the jigs 200, 202 engaged with the engagement portions 90, 92 closer to each other in the Z direction. While the supporting member 30 is compressed in the Z direction, the supporting member 30 is inserted between a top plate portion 14 of a housing 10 and an intermediate plate 50. This facilitates mounting of the supporting member 30 to the all-solid-state battery 20.

### Variants

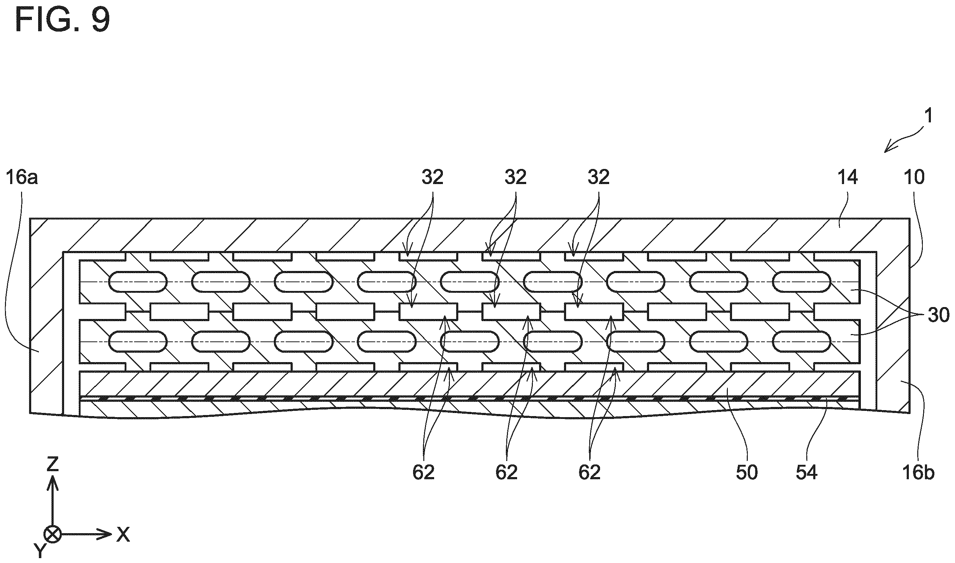

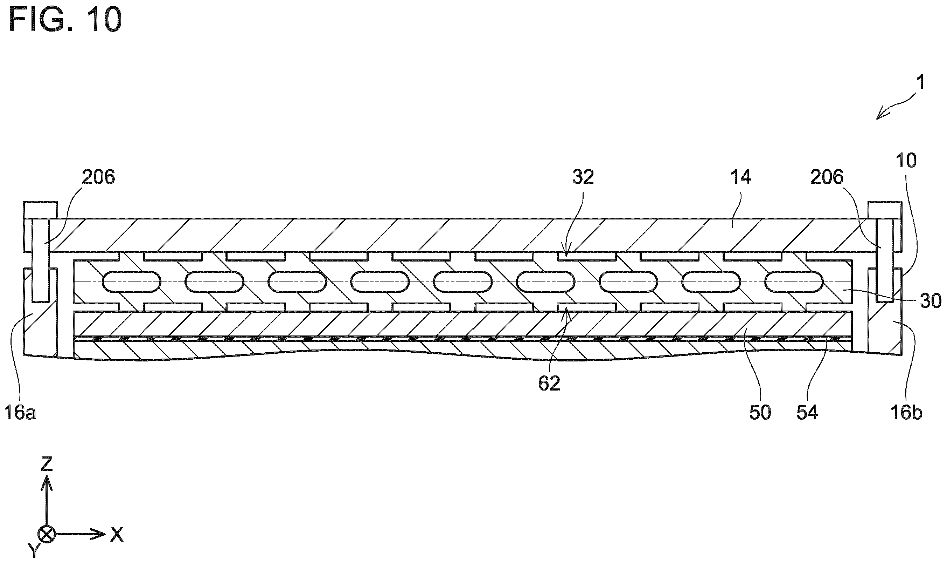

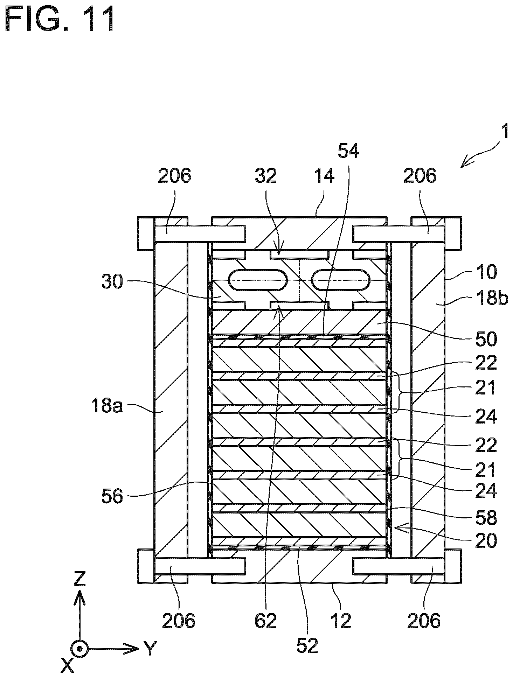

(1) As illustrated in FIG. 9, plural supporting members 30 may be stacked in the Z direction. The plural supporting members 30 may each comprise a plurality of first spring portions 32 and a plurality of second spring portions 62.
(2) As illustrated in FIG. 10, the top plate portion 14 of the housing 10 may be fixed to the left plate portion 16a and the right plate portion 16b with bolts 206.
(3) As illustrated in FIG. 11, the housing 10 may comprise a front plate portion 18a disposed at the front in the Y direction and a rear plate portion 18b disposed at the rear in the Y direction (FIG. 11 illustrates a Y-Z cross-sectional view). The front plate portion 18a and the rear plate portion 18b are arranged in the Y direction with a space therebetween. The front plate portion 18a and the rear plate portion 18b are each configured to have a substantially flat plate shape. The all-solid-state battery 20 and the supporting member 30 are interposed between the front plate portion 18a and the rear plate portion 18b.

A third insulating film 56 is interposed between the all-solid-state battery 20 and the supporting member 30, and the front plate portion 18a. The third insulating film 56 insulates the all-solid-state battery 20 and the supporting member 30 from the front plate portion 18a. Likewise, a fourth insulating film 58 is interposed between the all-solid-state battery 20 and the supporting member 30, and the rear plate portion 18b. The fourth insulating film 58 insulates the all-solid-state battery 20 and the supporting member 30 from the rear plate portion 18b.

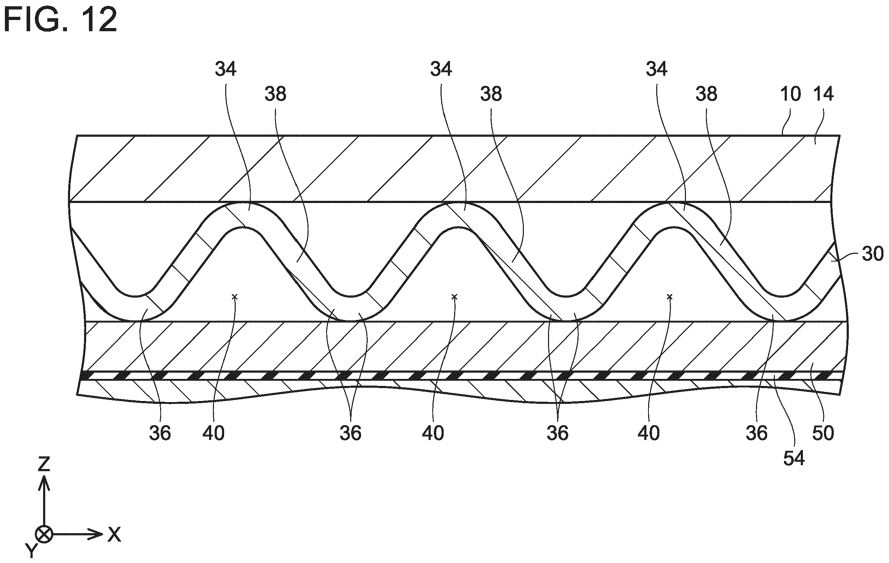

The front plate portion 18a and the rear plate portion 18b are each fixed to the bottom plate portion 12 and the top plate portion 14 with bolts 206. Alternatively, the front plate potion 18a and the rear plate portion 18b each may be fixed to the left plate portion 16a and the right plate portion 16b with bolts 206 (not illustrated).
(4) As illustrated in FIG. 12, the supporting member 30 may extend in the X direction while winding in the Z direction. The supporting member 30 comprises first supporting point portions 34 projecting toward the housing 10, pairs of second supporting point portions 36, 36 projecting toward the opposite side to the first supporting point portions 34 (toward the all-solid-state battery 20) at positions spaced from the first supporting point portions 34 in the X direction, and first cavity portions 40 provided between the pairs of second supporting point portions 36, 36 at positions facing the first supporting point portions 34.
(5) In each embodiment described above, the first spring portions 32 of the supporting member 30 are disposed close to the housing 10 and the second spring portions 62 are disposed close to the all-solid-state battery 20, however, in a variant, the first spring portions 32 may be disposed close to the all-solid-state battery 20 and the second spring portions 62 may be disposed close to the housing 10. The first supporting point portions 34 of the first spring portions 32 may project toward the all-solid-state battery 20. The third supporting point portions 64 of the second spring portions 62 may project toward the housing 10.
(6) In the embodiments described above, the intermediate plate 50 is constituted of a metal, however, in a variant, the intermediate plate 50 may be constituted of an insulating material. In this case, the second insulating film 54 interposed between the intermediate plate 50 and the all-solid-state battery 20 may be omitted.

Specific examples of the present invention have been described in detail, however, these are mere exemplary indications and thus do not limit the scope of the claims. The art described in the claims includes modifications and variations of the specific examples presented above. Technical features described in the description and the drawings may technically be useful alone or in various combinations, and are not limited to the combinations as originally claimed. Further, the art described in the description and the drawings may concurrently achieve a plurality of aims, and technical significance thereof resides in achieving any one of such aims.

### Reference Signs List

1: Supporting Structure, 10: Housing, 20: All-solid-state Battery, 21: All-solid-state battery cell, 30: Supporting Member, 32: First Spring Portion, 34: First Supporting Point Portion, 36: Second Supporting Point Portion, 38: First Body Portion, 40: First Cavity Portion, 42: Second Cavity Portion, 50: Intermediate Plate, 62: Second Spring Portion, 64: Third Supporting Point Portion, 66: Fourth Supporting Point Portion, 68: Second Body Portion, 73: First Corner Portion, 80: First Insertion Hole, 82: Second Insertion Hole, 90: First Engagement Portion, 92: Second Engagement Portion, 100: Solid Electrolyte Layer, 102: Positive-electrode Active Material Layer, 104: Negative-electrode Active Material Layer, 173: Second Corner Portion

## Claims

1. A supporting structure supporting an all-solid-state battery, the supporting structure comprising:
a housing accommodating the all-solid-state battery; and
a supporting member interposed between the all-solid-state battery and the housing and supporting the all-solid-state battery while the all-solid-state battery is accommodated in the housing,
wherein
the supporting member comprises a plurality of first spring portions arranged in a first direction orthogonal to a direction in which the all-solid-state battery and the supporting member are arranged, and
the first spring portions each comprise a first supporting point portion projecting toward the housing or the all-solid-state battery; a pair of second supporting point portions projecting toward an opposite side to the first supporting point portion at positions spaced from the first supporting point portion in the first direction; and a first cavity portion provided between the pair of second supporting point portions at a position facing the first supporting point portion.

2. The supporting structure according to claim 1, wherein
the supporting member comprises a plurality of second spring portions facing the first spring portions in the direction in which the all-solid-state battery and the supporting member are arranged,
the second spring portions each comprise a third supporting point portion projecting toward the opposite side to the first supporting point portion; a pair of fourth supporting point portions projecting toward an opposite side to the third supporting point portion at positions spaced from the third supporting point portion in the first direction; and a second cavity portion provided between the pair of fourth supporting point portions at a position facing the third supporting point portion, and
each pair of second supporting point portions of the first spring portions and corresponding pair of fourth supporting point portions of the second spring portions facing the first spring portions are fixed to each other to face each other.

3. The supporting structure according to claim 1 or 2, wherein
the first spring portions each comprise a first body portion extending in the first direction,
each pair of second supporting point portions of the first spring portions projects from the first body portion toward the opposite side to the first supporting point portion,
corner portions are provided between a first cavity portion-side surface of each first body portion and side surfaces of the second supporting point portions, and
inner surfaces of the corner portions are configured as curved surfaces.

4. The supporting structure according to claim 2 or claim 3 depending from claim 2, wherein
the first spring portions each comprise a first insertion hole, and
the second spring portions each comprise a second insertion hole at a position facing its corresponding first insertion hole.

5. The supporting structure according to claim 2, or claim 3 or 4 depending from claim 2, wherein
the first spring portions each comprise a first body portion extending in the first direction,
the first supporting point portion of each first spring portion projects from the first body portion toward the housing or the all-solid-state battery,
a first engagement portion is provided between a first supporting point portion-side surface of the first body portion and a side surface of the first supporting point portion,
the second spring portions each comprise a second body portion extending in the first direction,
the third supporting point portion of each second spring portion projects from the second body portion toward the opposite side to the first supporting point portion, and
a second engagement portion is provided between a third supporting point portion-side surface of the second body portion and a side surface of the third supporting point portion.
